# EUROPÄISCHE PATENTSCHRIFT

(11) **EP 0 799 423 B1**
(45) Veröffentlichungstag und Bekanntmachung des Hinweises auf die Patenterteilung: **09.06.1999**
(21) Anmeldenummer: 95942126.4
(22) Anmeldetag: 12.12.1995
(51) Int. Cl.: G01P 3/488, G01P 3/44

(54) **VORRICHTUNG ZUR BESTIMMUNG VON DREHBEWEGUNGEN**
ROTARY MOTION DETECTION DEVICE
PROCEDE DE DETECTION DE MOUVEMENTS DE ROTATION

(30) Priorität: 24.12.1994 DE 4446526
(43) Veröffentlichungstag der Anmeldung: 08.10.1997
(73) Patentinhaber: Continental Teves AG & Co. oHG, 60488 Frankfurt (DE)
(72) Erfinder: GOOSSENS, André, F., L., B-2840 Rumst (BE); SCHOLIERS, Bernard, B-1800 Mechelen (BE)
(74) Vertreter: Portwich, Peter
(86) Internationale Anmeldenummer: EP9504902
(87) Internationale Veröffentlichungsnummer: WO9620407

(56) Entgegenhaltungen:
- EP-A- 0 391 160
- EP-A- 0 532 077
- WO-A-93/22688
- FR-A- 2 664 974

## Beschreibung

Die Erfindung bezieht sich auf eine Vorrichtung zur Bestimmung von Drehbewegungen und zum Erzeugen eines die Drehbewegung darstellenden elektrischen Wechselsignals, mit einem Signalgeber, der die Drehbewegung ausführt und der in Form eines Ringes, Rades, Hohlzylinders oder dergleichen mit nach innen weisenden Zähnen bzw. Erhebungen ausgebildet ist, und mit einem stationären induktiven Meßwertaufnehmer, der in der von dem Signalgeber, aufgespannten Fläche angeordnet und als doppelseitige Meßspule ausgebildet ist, welche einen Kern aus Permanentmagneten und langgestreckten, beidseitig aus der Meßspule herausragenden und bis zu dem Signalgeber reichenden Polschuhen aufweist, wobei die nach innen gerichteten Zähne oder Erhebungen und die Polschuhe derart ausgebildet, angeordnet und aufeinander abgestimmt sind, daß stets, wenn ein Endstück eines Polschuhs auf einen Zahn bzw. eine Erhebung weist, das zweite, diametral gegenüberliegende Enstück des Polschuhs einer Zahnlücke bzw. Vertiefung gegenübersteht.

Aus der DE-42 13 977 A1 (P 7322) ist eine derartige Vorrichtung bekannt. In einem Signalgeberring mit Innenverzahnung ist bei dieser Vorrichtung eine doppelseitige Meßspule angeordnet, die einen Kern aus einem senkrecht zur Meßspulenachse magnetisierten Permanentmagneten aufweist, auf dessen Polflächen, also zwischen Kern und Spule, jeweils ein langgestreckter, beidseitig aus der Spule herausragender und bis zur Innenverzahnung reichender Polschuh aufgelegt ist. Diese Polschuhe und die Innenverzahnung sind versetzt angeordnet, bzw. derartig aufeinander abgestimmt, daß immer dann, wenn ein Polschuhende zu einem Zahn weist, das diametral gegenüberliegende Polschuhende auf eine Zahnlücke gerichtet ist.

Ferner ist aus der DE-39 27 007 A1 eine Drehzahlmeßvorrichtung bekannt, die ebenfalls als Signalgeber eine Zahnscheibe mit Innenverzahnung besitzt. Im Inneren des Signalgebers befindet sich eine diametral ausgerichtete Meßspule, die ein Flußleitstück umschließt, dessen Länge etwa dem Innendurchmesser, verringert um den erforderlichen Luftspalt zwischen den Stirnseiten des Flußleitstückes und den Zähnen des Signalgebers, entspricht. Das Flußleitstück ragt nach beiden Seiten aus der Spule heraus. An den Enden des Flußleitstükkes sind senkrecht zu dem Flußleitstück magnetisierte Permanentmagnete aufgesetzt. Befinden sich den beiden Magneten einer Spulenseite jeweils Signalgeberzähne gegenüber, dann entsteht ein Magnetschluß über der jeweiligen Außenseite der Magnete durch die Zahnscheibe zum Flußleitstück und dann zur Innenseite des jeweiligen Magneten. Befinden sich die beiden Magneten Zahnlücken gegenüber, dann verläuft der Hauptfluß über den Luftspalt zum Flußleitstück und zur Innenseite der Magnete. An den beiden Spulenseiten wechselt daher der Magnetfluß durch das Flußleitstück in Abhängigkeit davon, ob sich den Magneten Zahnlücken oder Zähne gegenüber befinden.

Der Erfindung liegt die Aufgabe zugrunde, eine Drehzahlmeßvorrichtung der eingangs genannten Art weiterzuentwickeln, vor allem mit dem Ziel, ein höheres Nutzsignal zu erreichen, ohne eine Erhöhung des Einbauvolumens in Kauf nehmen zu müssen. Auf möglichst geringe Herstellungskosten wurde ebenfalls Wert gelegt.

Es hat sich gezeigt, daß diese Aufgabe mit der im Anspruch 1 beschriebenen Vorrichtung zu lösen ist. Das Besondere der erfindungsgemäßen Vorrichtung besteht in der Ausbildung des Spulenkerns, der erfindungsgemäß aus mindestens zwei Permanentmagneten besteht, die parallel zur Spulenachse angeordnet und senkrecht zur Meßspulenachse magnetisiert sind und die jeweils zwischen zwei langestreckten Polschuhen eingefügt sind. Die angrenzenden, jeweils durch einen Polschuh getrennten Permanentmagnete sind dabei zweckmäßigerweise mit entgegengerichteter Polarität magnetisiert.

Nach einem besonders vorteilhaften Ausführungsbeispiel der Erfindung umfaßt die Vorrichtung einen Signalgeber mit einer ungeraden Anzahl von Zähnen bzw. Erhebungen und einer Meßspule, deren Kern sich aus zwei langgestreckten Permanentmagneten, die zwischen drei Polschuhen eingebettet sind, zusammensetzt.

Besitzt der Signalgeber eine gerade Zähnezahl bzw. eine gerade Anzahl von Erhebungen, wird nach einem Ausführungsbeispiel der Erfindung zweckmäßiger Weise eine Meßspule verwendet, deren Kern aus einer ungeraden Anzahl, mindestens aus drei, langgestreckten Permanentmagneten besteht, die in einer entsprechenden Anzahl, also mindestens zwischen 4 Polschuhen, eingebettet sind.

Weitere Einzelheiten der Erfindung gehen aus der folgenden Beschreibung von Ausführungsbeispielen anhand der beigefügten Abbildungen hervor.
Es zeigen:
- Fig. 1: im Axialschnitt ein Radlager mit einer Ausführungsart einer Meßvorrichtung nach der Erfindung,
- Fig. 2: schematisch und als Teildarstellung einen Schnitt entlang der Linie I/I in Fig. 1 den Signalgeber und die Meßspule gemäß einer Ausführungsart nach der Erfindung und
- Fig. 3: in gleicher Darstellungsweise wie Fig. 2 eine weitere Variante der Meßspule nach der Erfindung.

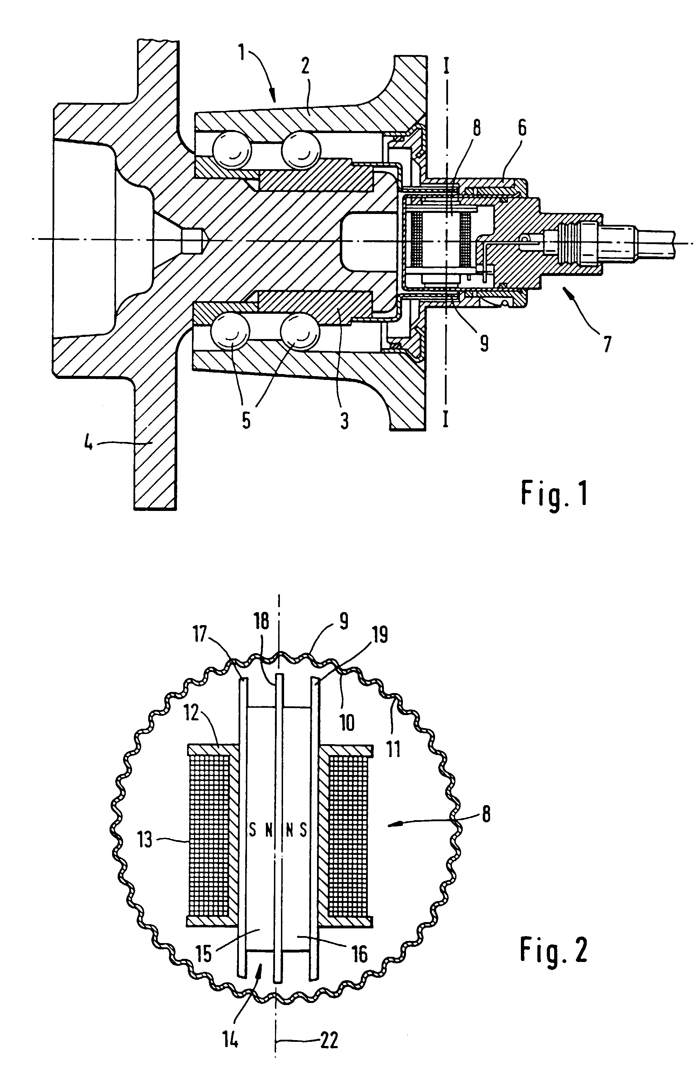

Fig. 1 dient zur Erläuterung des prinzipiellen Aufbaus und der Plazierung eines Radlagersensors, bei dem die mit der erfindungsgemäßen Ausgestaltung der Meßvorrichtung erreichten Vorteile zur Geltung kommen.

Dargestellt ist in Fig. 1 ein für ein Kraftfahrzeug vorgesehenes Radlager 1, das im wesentlichen aus einem Radlager-Außenring 2, einem Radlager-Innenring 3, in den eine Radwelle 4 eingesetzt ist, und aus Radlagerkugeln 5 besteht. Die Drehachse des Radlagers 1 ist ebenfalls in Fig. 1 strichpunktiert angedeutet.

Mit dem stationären, am Fahrzeug befestigten Außenring 2 ist ein Sensorgehäuse 6 verbunden, in das ein Meßwertaufnehmer oder Sensor, der in seiner Gesamtheit mit 7 bezeichnet ist, eingesteckt und eingerastet ist. In dem Sensorgehäuse befindet sich eine Meßspule 8. Als Meßwertgeber 9 ist hier ein topfähnliches Gebilde vorgesehen, das auf dem Innenring 3 des Radlagers aufsitzt und sich mit diesem Innenring dreht und das in Höhe der Meßspule 8 einen Signalgeberring 9 mit (nicht dargestellter) Innenverzahnung oder mit wellenförmiger Struktur aufweist.

Die erfindungswesentliche Ausbildung der Meßspule 8 und die relative Anordnung der einzelnen Komponenten dieser Meßspule 8 zu der Innenverzahnung oder, wie im vorliegenden Beispiel, zu den Erhebungen 10 und Vertiefungen 11 einer als Signalgeber 9 dienenden wellenförmigen Struktur zeigt Fig. 2. Die Erhebungen 10 - aus "Sicht" der doppelseitigen Meßspule 8 - entsprechen den Zähnen eines als Zahnrad mit Innenverzahnung ausgebildeten bekannten Signalgebers gleicher Funktion. Die Vertiefungen 11 entsprechen den Zahnlücken. Die dargestellte Struktur des Signalgebers 9 läßt sich zum Beispiel in vorteilhafter Weise durch Tiefziehen eines aus dünnem Stahlblech bestehenden Körpers herstellen. Dieses Verfahren ist im Vergleich zur Herstellung eines Signalgebers mit Innenverzahnung sehr kostengünstig.

Die wichtigsten Bestandteile der doppelseitigen Meßspule 8 sind ein Spulenkörper 12, der eine Spulenwicklung 13 trägt, und ein Spulenkern 14. Dieser Kern 14 setzt sich nach Fig. 2 aus zwei langgestreckten Permanentmagneten 15, 16 und drei Polschuhen 17, 18, 19 zusammen, die auf den Oberflächen der Permanentmagnete 15, 16 aufgelegt sind. Die Permagnete 15, 16 sind senkrecht zur Spulenachse 22, die durch strichpunktierte Linie symbolisiert ist, magnetisiert und entgegengesetzt polarisiert; nach Fig. 2 treffen am mittleren Polschuh 18 die Nordpole NN der beiden Permanentmagnete 15, 16 aufeinander.

Für die Funktion der erfindungsgemäßen Meßvorrichtung ist es wesentlich, daß die Polschuhe 17, 18, 19 auf beiden Seiten aus der Meßspule 8 herausragen, bis (fast) zur Innenseite des Signalgeberringes 9 reichen und daß die Anordnung und Ausgestaltung derart getroffen ist, daß stets dann, wenn das Endstück eines Polschuhs auf einen Zahn bzw. eine Erhöhung 10 des Signalgebers 9 gerichtet ist, das zweite, diametral entgegengesetzte Ende dieses Polschuhs eine Zahnlücke bzw. bei der dargestellten welligen Struktur einer Vertiefung 11 gegenüberliegt. In dem Beispiel der Fig. 2 und in der dargestellten Position weisen die oberen (bezogen auf die Abbildung) Endstücke der Polschuhe 17 und 19 auf Zähne bzw. Erhöhungen 10, die unteren Endstücke dieser Polschuhe auf Zahnlücken bzw. Vertiefungen 11. Der mittlere Polschuh 18 zeigt oben in der Situation nach Fig. 2 auf eine Vertiefung 11, unten auf eine Erhöhung 10.

Die Meßspule nach Fig. 2 ist für einen Signalgeber mit ungerader Zähnezahl besonders geeignet. In diesem Fall kann die Meßspule 8 zentral in dem Signalgeberring 9 gelagert werden. Eine spezielle Formgebung oder Abkrümmung der Polschuhe zum Positionieren bzw. Abstimmen mit der Zahnung ist dann nicht erforderlich.

Wenn ein Signalgeber mit gerader Zähnezahl verwendet werden soll, ist es zweckmäßig, der Meßspule einen Kern mit einer geraden Anzahl an Polschuhen, z. B. mit vier Polschuhen und drei Permanentmagneten, auf denen diese Polschuhe zur Auflage kommen, zu geben.

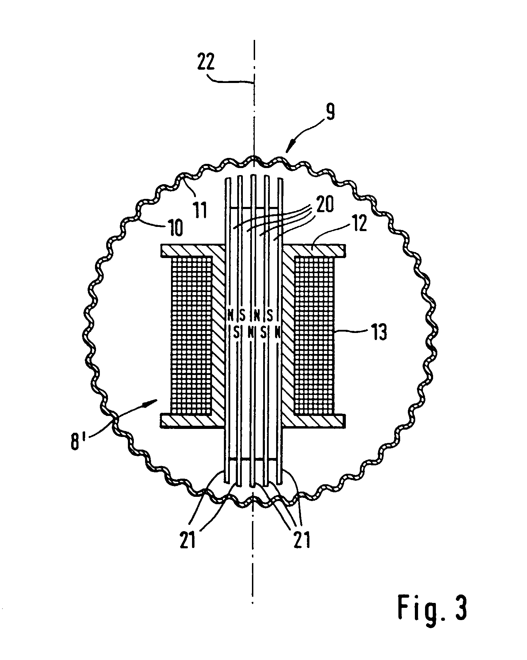

In manchen Fällen kann es erforderlich sein, wenn eine besonders hohe Nutzspannung verlangt ist, eine noch feinere Unterteilung des Spulenkerns vorzunehmen. Ein Beispiel hierfür zeigt Fig. 3. In diesem Fall sind fünf beidseitig aus einer Meßspule 8' herausragende Polschuhe 21 vorgesehen, die wiederum jeweils von einem, insgesamt von vier Permanentmagneten 20 getrennt sind. Im dargestellten Beispiel wurde ein relativ geringer Polschuhabstand von nur 1/2-Zahnteilung gewählt. Zweckmäßigerweise wird bei einem solchen Kernaufbau ein kunststoffgebundener Magnetwerkstoff zur Herstellung der Permanentmagnete 20 gewählt.

Auch bei der Ausführungsart nach Fig. 3 sind die Permanentmagnete 20 senkrecht zur Spulenachse 22 magnetisiert und derart polarisiert, daß jeweils gleiche Pole an den durch die Polschuhe 21 getrennten Grenzflächen aufeinandertreffen.

Mit der erfindungsgemäßen Anordnung und Ausgestaltung wird auf relativ einfache Weise eine Erhöhung des Nutzsignals im Vergleich zu bekannten Meßvorrichtungen dieser Art erreicht, oder es wird, wenn erforderlich, ein größerer Luftspalt oder eine größere Luftspalttoleranz möglich.

## Patentansprüche

1. Vorrichtung (7) zur Bestimmung von Drehbewegungen und zum Erzeugen eines die Drehbewegung darstellenden elektrischen Wechselsignals, mit einem Signalgeber (9), der die Drehbewegung ausführt und der in Form eines Ringes, Rades, Hohlzylinders oder dergleichen mit nach innen gerichteten Zähnen bzw. Erhebungen (10) ausgebildet ist, und mit einem stationären, induktiven Meßwertaufnehmer (8, 8'), der in der von dem Signalgeber (9) aufgespannten Fläche angeordnet und als doppelseitige Meßspule (8, 8') ausgebildet ist, welche einen Kern (14) aus Permanentmagneten (15, 16, 20) und langgestreckten, beidseitig aus der Meßspule (8, 8') herausragenden und bis zu dem Signalgeber (9) reichenden Polschuhen (17, 18, 19, 21) aufweist, wobei die nach innen gerichteten Zähne oder Erhebungen (10) und die Polschuhe (17, 18, 19, 21) derart ausgebildet, angeordnet und aufeinander abgestimmt sind, daß stets, wenn ein Endstück eines Polschuhs (17, 18, 19, 21) auf einen Zahn bzw. eine Erhebung (10) weist, das zweite, diametral gegenüberliegende Enstück des Polschuhs (17, 18, 19, 21) einer Zahnlücke bzw. Vertiefung (11) gegenübersteht, **dadurch gekennzeichnet**, daß sich der Spulenkern (14) aus mindestens zwei Permanentmagneten (15, 16, 20), die parallel zur Spulenachse (22) angeordnet und senkrecht zur Spulenachse (22) magnetisiert sind und die jeweils zwischen zwei langgestreckten Polschuhen (17, 18, 19, 21) eingefügt sind, zusammensetzt, wobei die angrenzenden, jeweils durch einen Polschuh (18, 21) getrennten Permanentmagnete (15, 16, 20) mit entgegengerichteter Polarität magnetisiert sind.

2. Vorrichtung nach Anspruch 1, dadurch **gekennzeichnet**, daß diese einen Signalgeber (9) mit einer ungeraden Anzahl an nach innen gerichteten Zähnen oder Erhebungen (10) und eine Meßspule (8, 8') umfaßt, deren Kern aus zwei Permanentmagneten (15, 16), die zwischen drei Polschuhen (17, 18, 19) eingebettet sind, besteht.

3. Vorrichtung nach Anspruch 1, **dadurch gekennzeichnet**, daß diese einen Signalgeber (9) mit einer geraden Anzahl von nach innen gerichteten Zähnen oder Erhebungen (10) und einer Meßspule (8, 8') umfaßt, deren Kern (14) aus einer ungeraden Anzahl, mindestens aus drei langgestreckten Permanentmagneten (15, 16, 20), die zwischen einer entsprechenden Anzahl an Polschuhen (17, 18, 19, 21), mindestens vier Polschuhen, eingebettet sind, besteht.

## Claims

1. Device (7) for determining rotary motions and for generating an electric alternating signal representative of the rotary motion, including a signal generator (9) which undergoes the rotary motion and, in the form of a ring, wheel, hollow cylinder, or a similar element, is provided with inwardly directed teeth or projections (10), and a stationary, inductive transducer (8, 8') which is arranged within the surface of the signal generator (9) and is designed as a double-sided measuring coil (8, 8') that comprises a core (14) of permanent magnets (15, 16, 20) and elongated pole shoes (17, 18, 19, 21) which project from either side of the measuring coil (8, 8') up to the signal generator (9), wherein the inwardly directed teeth or projections (10) and the pole shoes (17, 18, 19, 21) are designed, arranged and conformed to each other so that, whenever an end piece of a pole shoe (17, 18, 19, 21) points to a tooth or a projection (10), the second, diametrically opposite end piece of the pole shoe (17, 18, 19, 21) confronts a tooth gap or depression (11),
**characterized** in that the coil core (14) has at least two permanent magnets (15, 16, 20) which are arranged parallel to the coil axis (22), magnetized perpendicularly to the coil axis (22) and respectively inserted between two elongated pole shoes (17, 18, 19, 21), wherein the adjacent permanent magnets (15, 16, 20), respectively isolated by a pole shoe (18, 21), are magnetized with reversed polarity.

2. Device as claimed in claim 1,
**characterized** in that the device includes a signal generator (9) having an uneven number of inwardly directed teeth or projections (10) and a measuring coil (8, 8') having a core which is made up of two permanent magnets (15, 16) which are embedded between three pole shoes (17, 18, 19).

3. Device as claimed in claim 1,
**characterized** in that the device includes a signal generator (9) having an even number of inwardly directed teeth or projections (10) and a measuring coil (8, 8') having a core (14) that includes an uneyen number, at least three, of elongated permanent magnets (15, 16, 20) which are embedded between a corresponding number of pole shoes (17, 18, 19, 21), at least four pole shoes.

## Revendications

1. Dispositif (7) permettant de déterminer des mouvements de rotation et de produire un signal électrique alternatif représentant le mouvement de rotation, comprenant un générateur de signal (9), qui exécute le mouvement de rotation et qui est réalisé sous forme d'un anneau, roue, cylindre creux ou analogue comportant des dents ou parties surélevées (10) dirigées vers l'intérieur, et un capteur inductif de valeur de mesure (8, 8') fixe qui est disposé dans la surface balayée par le générateur de signal (9) et est réalisé sous forme d'une bobine de mesure (8, 8') à double face qui comprend un noyau (14), constitué d'aimants permanents (15, 16, 20), et des pièces polaires (17, 18, 19, 21) allongées qui font saillie des deux côtés hors de la bobine de mesure (8, 8') et s'étendent jusqu'au générateur de signal (9), les dents ou parties surélevées (10) dirigées vers l'intérieur et les pièces polaires (17, 18, 19, 21) étant agencées, disposées et adaptées les unes aux autres de façon telle que, chaque fois qu'une partie d'extrémité d'une pièce polaire (17, 18, 19, 21) fait face à une dent ou une partie surélevée (10), la seconde partie d'extrémité, diamétralement opposée, de la pièce polaire (17, 18, 19, 21) se trouve en regard d'un entredent ou d'une partie en retrait (11), caractérisé en ce que le noyau de bobine (14) est composé d'au moins deux aimants permanents (15, 16, 20) qui sont disposés parallèlement à l'axe de bobine (22) et sont aimantés perpendiculairement à l'axe de bobine (22) et qui sont interposés chacun entre deux pièces polaires (17, 18, 19, 21) allongées, tandis que les aimants permanents (15, 16, 20) adjacents qui sont chaque fois séparés par une pièce polaire (18, 21) sont aimantés avec des polarités de sens opposés.

2. Dispositif suivant la revendication 1, caractérisé en ce qu'il comprend un générateur de signal (9), comportant un nombre impair de dents ou parties surélevées (10) dirigées vers l'intérieur, et une bobine de mesure (8, 8') dont le noyau est constitué de deux aimants permanents (15, 16) qui sont enfermés entre trois pièces polaires (17, 18, 19).

3. Dispositif suivant la revendication 1, caractérisé en ce qu'il comprend un générateur de signal (9), comportant un nombre pair de dents ou parties surélevées (10) dirigées vers l'intérieur, et une bobine de mesure (8, 8') dont le noyau (14) est constitué d'un nombre impair, au moins égal à trois, d'aimants permanents (15, 16, 20) allongés qui sont enfermés entre un nombre correspondant de pièces polaires (17, 18, 19, 21), au moins quatre pièces polaires.
